# EUROPEAN PATENT APPLICATION

(11) **EP 0 684 335 A1**
(43) Date of publication of application: **29.11.1995**
(21) Application number: 95107955.7
(22) Date of filing: 24.05.1995
(51) Int. Cl.: D06F 58/28, D06F 25/00

(54) **Method for drying laundry and machine implementing such method**

(30) Priority: 26.05.1994 IT TO940430
(71) Applicant: Merloni Elettrodomestici S.p.A., I-60044 Fabriano (AN) (IT)
(72) Inventor: Lucarelli, Flavio, I-60048 Serra S. Quirico (AN) (IT); Mariotti, Costantino, I-06028 Sigillo (PG) (IT)

(57) **Abstract**

A method is described for drying laundry, that provides a treatment cycle (B) during which the basket containing the laundry to be dried is made to rotate at a first substantially determined speed (55 rpm) and for a determined period of time (120 minutes), in the presence of hot air inside a tub within which said basket is placed in rotation, characterised in that during the rotation of the basket at least one spinning phase (C) of the laundry is provided, i.e. a rotational phase of the basket at a second speed (1000 rpm) substantially higher than said first speed (55 rpm).

## Description

The present invention refers to a method for drying laundry, wherein a basket containing the laundry to be dried is placed in rotation at a first substantially determined speed and for a certain period of time, with the presence of hot air inside a tub within which said basket is placed in rotation.

Drying methods of the cited type are known and used with some kinds of electric appliances which offer the possibility of realising the drying of the laundry, after that it has been washed; such electric appliances are typically constituted by the so called washing-drying machines, that allow to realise both the washing and the drying of the laundry, and by drying machines, which only provide for drying the laundry.

For attaining the drying cycle, in such machines, the basket containing the laundry to be dried is made to rotate for a certain period of time, at a certain speed, and in the presence of hot air, being generated in a way in itself known, inside the chamber within which the basket rotates; the rotational speed of the basket during drying is relatively low, typically in the order of the 55 rpm; the drying time, that is generally set manually by way of a dedicated timer device, is variable depending on the necessity of the user (i.e. depending on the degree of drying that one wishes to obtain and on the type of clothes to be dried); the temperature of the hot air induced in the tub is generally in the order of the 130-140°C.

In certain cases (for example in the case of cotton goods for which the user wishes to obtain a good degree of drying), it is necessary to select a medium-long drying time, varying from at least 60 to 120 minutes. This involves some drawbacks, concerning both the considerable amount of time needed before being able to withdraw the dry laundry from the basket of the machine, and of an economical character, due to the long period of time dedicated to the drying phase corresponding to a certain level of energy consumption, influencing in a significant manner the overall costs of the drying cycle.

Apart from this, it may also occur that, notwithstanding the selection of the maximum drying time available, the quality of such drying is not satisfactory.

The main aim of the invention is that of eliminating the previously mentioned drawbacks, indicating a laundry drying method, and the relative machine, which allows for reducing the overall time of a drying cycle compared to a drying cycle of the known type or that, with the same drying time as the known cycle, allows for obtaining an improved level of drying; in such light, therefore, a further aim of the present invention is also that of reducing the energy consumption of the machine during the drying cycle.

In such main purview of the invention, its further aim is that of indicating a drying method, and the relative machine, the development thereof being both adaptable in a simple and economic way to the characteristics of the load of laundry to be dried.

Such aims are reached according to the present invention by a drying method, and a laundry washing-drying machine, or dryer, incorporating the characteristics of the annexed claims.

Further characteristics and advantages of the present invention will result in being clear from the following description and annexed drawings, supplied purely as an explanatory and non-limiting example, wherein:
- figure 1 represents, in a cartesian graph form, the comparison between the curve of water removal from a laundry load during a drying cycle of the known type and that of a drying cycle according to the present invention;
- figure 2 represents by way of a simplified block diagram the control system of the laundry washing and/or drying machine implementing the method according to the present invention;
- figure 3 represents by way of a simplified block diagram the control system of the laundry washing and/or drying machine implementing the method according to the present invention, in a first possible embodiment;
- Figure 4 represents by way of a simplified block diagram the control system of the laundry washing and/or drying machine implementing the method according to the present invention, in a second possible embodiment.

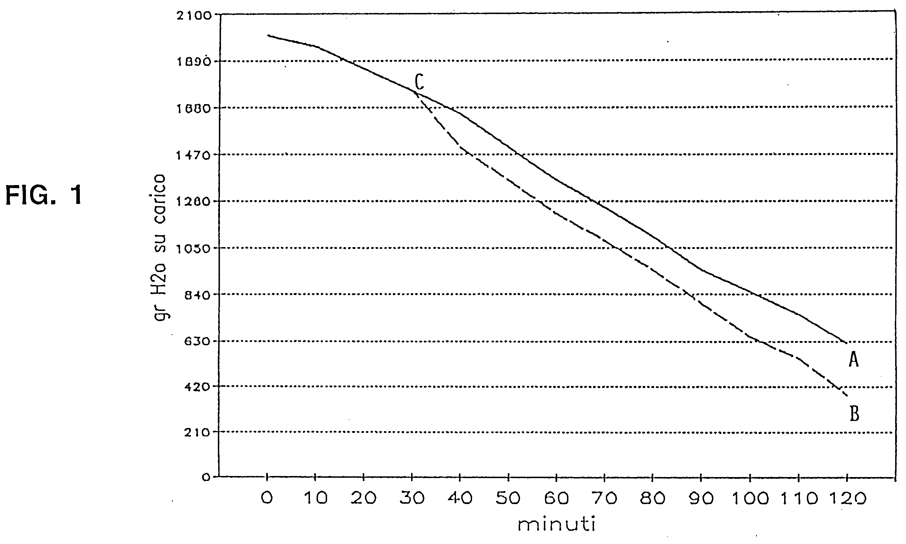

Figure 1 illustrates the passage over time of the curve of water removal from a laundry load during a drying cycle of the known type, compared to a drying cycle realised according to the details of the present invention. The applied example of figure 1, refers in particular to the drying of a laundry load of a mass being equal to 2,5 kg, of cotton RH% 80%, contained in the basket of a washing-drying machine, or dryer, comprising all the known elements for its functioning.

In figure 1, on the abscissas axis the drying time in minutes is shown, that as said is normally selected by the user by way of a timer; on the axis of the ordinates the grams of water in the laundry load to be dried in the various drying phases are indicated.

In such figure 1, the full line indicated with A refers to a drying cycle according to the known art, where the user has selected a drying time of 120 minutes. Such cycle is carried out in a known way: the machine carries out the drying through the rotation of the basket in which the laundry is contained at a substantially fixed speed, very low, in the order of the 55 rpm; in the course of such rotation the basket alternates movements in a clockwise sense with movements in counter-clockwise sense. Simultaneously within the chamber of the machine a hot dry air flow is induced by way of a fan, generated in a way in itself known, being of a temperature in the order of the 130 °C; such drying cycle is carried out, in the specific case, for the 120 minutes selected by the user (usually, during the last minutes of the drying, the production of hot air is interrupted, even though the fan continues to function).

From an exam of such line A, it can be seen how, in substance, upon starting the drying cycle the laundry contains about 2000 grams of water, and the it ends with a presence of water residues in the laundry being equal to about 630 grams.

In the same figure 1 the dotted line indicated with B, refers to a drying cycle realised according to the details of the present invention.

The drying cycle represented in B is for the greater part similar to that indicated with A, but has the particularity to provide in the course of its development a spinning phase of the laundry, or a rotational phase of the basket at a speed being substantially higher than that normally provided, of 55 rpm; according to invention the consent for initiating such spinning phase takes place upon achieving a certain temperature of the mass of laundry.

In practice it has been advantageously verified that such supplementary spinning phase during the course of drying carries out a greater level of water removal than if compared to the final spinning provided by a normal washing cycle, as the force of adhesion of the water to the laundry load decreases with the increase of its temperature.

In particular, in the case illustrated in figure 1, the drying cycle begins in a known way, with a rotational speed of the basket in the order of 55 rpm; after about 30 minutes from the beginning of the drying cycle, in the point indicated with C on the dotted line B (that until point C coincides with the line A) said supplementary drying phase of the load takes place: such spinning phase is carried out in the case illustrated upon reaching a temperature considered suitable, for example of about 60°C, at a speed of about 1000 rpm and for about two minutes; with an explanatory purpose it is supposed that in point C the temperature of the laundry is equal to a temperature of 60°C. Upon termination of the spinning phase, the basket returns to rotate at the standard speed, of 55 rpm until finishing the drying cycle.

As can be seen from the dotted line B according to the invention, the spinning phase started during the drying cycle according to invention has the effect providing a water removal being decidedly greater (about 250 grams more water) if compared to the known cycle A, with equal total drying times (120 minutes), and so a better degree of drying; from another viewpoint, it is clear how according to the present invention it is possible to use a minor time (about 15-20 minutes less in the case described) for having a water removal, and therefore a drying degree, equal to that obtained by means of the known drying type: generally speaking, the reduction of the drying time is of about 10% if compared to the known art.

As said, the supplementary spinning phase is activated upon reaching a certain temperature of the mass of laundry, or of the air inside the chamber within which the basket of the machine rotates. Such supplementary spin can also begin after an established period of time (in the case illustrated, 30 minutes): such established time is naturally calculated based on experience and on the characteristics of the heating system of the air and of the tub of the machine: such embodiment of the invention is therefore of simple implementation on the known type of machines, for example through the simple modification of a cam of the timer that manages the drying, in the case of machines with electromechanical timers, or through the simple modification of the software of a timer of the electronic type.

In more sophisticated solutions, the starting signal of the supplementary spin can come from an appropriate sensor, such as a thermostat positioned on the washing chamber, able to detect or derive the value of the temperature of the laundry mass: in substance, therefore, to detect the suitable established temperature, the temperature sensor provides its consent for initiating the spinning phase.

Naturally the enabling of the supplementary spinning as described above may be carried out by way of an external button, which can be selected by the user, or directly in automatic, with each drying cycle.

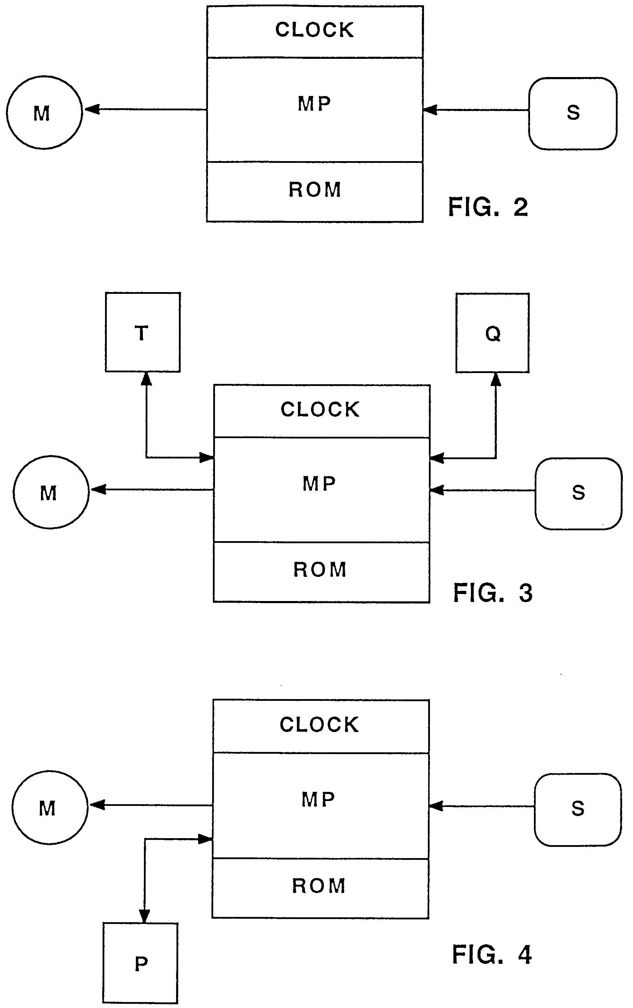

In figure 2 the principle's diagram of a laundry washing and/or drying machine implementing the present invention is represented by way of a block diagram.

In such figure, M indicates the motor that places the basket of the washing-drying machine in rotation; S indicates a sensor able to detect or derive the value of the temperature of the laundry mass contained in the basket; with MP an electronic micro-controller is indicated, comprising a counter or internal clock (CLOCK) and to which permanent memory (ROM) means are associated; in the case used as an example such micro-controller MP is that present on a digital module for controlling the motor speed of the washing-drying machine.

In the case illustrated in figure 2, in the permanent memory ROM of the micro-controller MP an opportune program is present indicating what is the suitable temperature for activating the supplementary spinning, what its duration has to be and what the rotation speed of the basket has to be during such spinning phase.

Thus, upon detecting by way of the sensor S the established temperature, the micro-controller MP will provide to enable and control the execution of the supplementary spinning, causing by way of the digital control module of the motor M the attainment of the greater rotational speed of the basket, in a way in itself known, and maintaining such greater speed for the established time. It is clear that the machine described in figure 2 may be indifferently equipped with a timer with an electromechanical type that manages the drying cycle or of a digital electronic type of timer. In particular, in the case of a timed initiation of the supplementary spinning phase, and therefore without the necessity of providing the sensor S, the invention could be implemented on a timer of the electromechanical type, simply modifying the profile of one of its cams.

It is to be considered that, in order to further improve the efficiency of the supplementary drying spin according to invention, it is desirable to also keep an account of the characteristics of the laundry load to be dried, i.e. the type (e.g. cotton, towelling, synthetics, etc.) of laundry and its quantity.

It is in fact understandable that the parameters of the method according to the invention (temperature and/or moment of initiating the spinning, its duration and basket rotational speed) also partly depend on the characteristics of the laundry load: according to a preferred embodiment of the present invention such parameters can therefore be advantageously adapted in function with the information relative to the characteristics of the load to be dried.

In this light, the micro-controller MP can dispose of information, duly encoded and organised inside its permanent memory ROM, that in function with the type of laundry load and its mass allow it to decide, by way of an opportune control program contained in the same permanent memory, which is the best temperature for the starting of the supplementary spinning and what is the most effective time of such spinning and the rotational speed of the basket.

According to the invention the aforementioned coded parameters in the permanent memory ROM of the micro-controller MP derive from numerous experimental tests carried out during the development phase of the control system of the machine according to invention; the scope of such tests is actually that of identifying, for every type of fabric and mass, the optimal value of the cited spinning parameters (starting temperature, duration, speed), in accordance with the possible needs of the user.

Figure 3 illustrates a possible embodiment of the invention according to that just described; in such figure, that utilises the same references as figure 2, with T a selector for the manual inputting of the type of laundry to be dried is indicated, while with Q a selector is shown for the manual inputting of the entity of the load.

For instance, selectors T and Q can each be made by way of a plurality of resistances, that are connected between themselves in series according to the position selected by the user. For the functioning, the micro-controller MP provides for sending to the selector T a signal of a certain voltage: if the selector is, for example, in the TOWELLING position, such signal returns to MP with the same initial voltage, inasmuch in the TOWELLING position no resistance of the selector T is inserted; vice versa, if the selector T is in the COTTON position, the signal will return to the microprocessor MP with a lower voltage than the initial one, as in the COTTON position a resistor in series of the selector T is inserted; if the selector T is in another position, (e.g. SYNTHETICS), the signal will return to the microprocessor MP with an even lower voltage, as in such position in the selector T two resistances in series will be for example inserted; and so on for the other selectable fabric categories on the selector T. In this way, sensing the voltage that is present at the ends of the micro-controller, it is able to detect the fabric type selected by the user. The same functioning principle is also true for the selector Q, that can for example provide three indicative positions of a large, medium or small laundry load.

In the memory ME the tables are therefore memorised that the micro-controller MP utilises for deciding, in function of the voltage of the return signal from selectors Q and T, which is the best temperature for starting the supplementary spinning phase, what its optimal duration should be and what the appropriate rotational speed of the basket during such spinning should be.

The method of coding said information may be of a classic type, i.e. by way of appropriate constant tables associated to the different categories of laundry loads and to the different needs of the user, or may be based on appropriate "IF <a> THEN <b>" type rules (fuzzy rules), deriving from the "fuzzy logic" theory applied to control systems, where <a> expresses the condition (detected with the assistance of appropriate sensors or commands imparted by the user) and <b> expresses the consequent action. In particular this second coding method of experimental data allows for inserting in the permanent memory of the micro-controller a considerable quantity of information, called knowledge base, in an extremely compact form and of such to be elaborated even with very economic devices (micro-controllers of 4 and 8 bit of limited elaboration capacity).

As modern machines for the washing and drying of laundry are almost all equipped with a micro-controller, it appears evident how the memory of the latter, appropriately programmed, allows for the implementation of the embodiment of the invention as described above and in the following.

In a further embodiment, the machine may not be equipped with the selectors Q and T, although still allowing the machine to consider the type and the quantity of the laundry to be dried; such embodiment is particularly advantageous in cases of wash and dry machines that provide for the execution of the drying phase immediately on termination of a washing cycle.

According to the embodiment illustrated in figure 4, that partly uses the same reference numbers as the previous figures, the information concerning the type of the laundry load to be dried (fabric type, quantity) is inferred in an automatic way, through the analysis of the behaviour of a pressure switch P present on the washing machine; in particular, according to such variation, the micro-controller MP is equipped with an appropriate knowledge base, coded in its permanent memory, that during the washing cycle allows it to obtain from the time of duration and from the number of water level restorations in the washing tub, operated under the control of the first-level pressure switch P, the necessary information concerning the characteristics of the laundry load; for more details regarding such method of obtaining information concerning the type and quantity of laundry present in a washing machine, note patent application TO93A000798 in the name of the same applicant; naturally other techniques are possible for obtaining in an automatic way said information concerning the type of load, some of which being mentioned in the cited Italian application.

In the case of wash and dry machines of the "input system" type, i.e. of the type wherein the washing program is selected based on data inserted by the user, such as the degree of soil, the laundry type and its quantity, the last two types of information are already present as data within the micro-controller and therefore are already available for the spinning phase during the drying cycle.

From that described above, it is clear that in the case of figure 4, the functioning of the machine is substantially similar to that described with regards to figure 3, but with the particularity that, with the exception of the manual time setting, the information necessary for the execution of the drying cycle that follows the washing cycle can be completely obtained in automatic (insofar, as illustrated, the provision of selectors Q and T is not indispensable).

With regards to the possible implementations of the invention described above, it is to be noted that such implementations are of very contained costs; in fact in the case of the most simplest embodiment (i.e. timed activation of the supplementary spinning) in practice requires a simple modification of the electromechanical timer, or of the software of the electronic timer, that manages the drying; similarly, the micro-controller, the cost of which is approximately one dollar, is normally already provided with washing-drying machines in one of its components (typically the digital control module of the motor); the same is also true for the temperature sensor, that may be the normal thermostat present on the washing chamber; in the case of the implementation of figure 3, the cost of selectors Q and T is practically non-existent if compared to the utility of the invention and in the case of the implementation of figure 4 there are no additional costs if compared to a machine of the known type, inasmuch all the elements for the implementation of the invention (S, MP, P) are normally already present in the machine.

The characteristics of the method described therefore result in being clear from the given description and annexed drawings. From the given description the advantages of the method subject of the present invention are also clear. In particular they are represented in that according to the invention the drying quality may be increased if compared to the known art, with the same amount of selected time; from another point of view, with equal results, the drying time of a laundry load with a machine according to invention may be reduced by at least 10% and, as a result, the energy consumption is also reduced.

Another substantial advantage of the invention is that constituted in the possibility of allowing the execution of an improved drying cycle in function of the characteristics of the laundry load, in order to provide a greater quality of the same.

It is clear that to the method and the machine, previously described as an explanatory and not limiting example, numerous modifications, adaptations, integrations, variations and replacements of elements with others being functionally equivalent can be introduced, without departing from the scope of protection of the following claims.

It is for example clear that, during said drying cycle, more spinning phases could be provided, at suitable moments and/or temperatures according to that described above.

In another variation the sensor (S) could be provided for sensing the humidity of the laundry, in order to decide the starting of the spinning phase.

As said, in solutions being less sophisticated than those described with regards to figures 2-4, the present invention may be directly implemented with the simple modification of a timer of the electromechanical type, that for example enables after an established time the supplementary spinning during the drying.

The same is so for a washing-drying machines where the drying follows the washing, and where, within certain limits, the characteristics of the load can be considered; considering that the electromechanical timers of washing-drying machines provide a plurality of selectable cycles (e.g. vigorous, delicate, wool, synthetics), it will be sufficient to modify only one cam for each cycle provided, that enables the supplementary spinning during drying, for allowing the implementation of the invention; in such case, therefore, the same timer would replace the functions of selector T.

## Claims

1. Method for drying laundry, that provides a treatment cycle (B) during which the basket containing the laundry to be dried is made to rotate at a first substantially determined speed (55 rpm) and for a determined period of time (120 minutes), in the presence of hot air inside a tub within which said basket is placed in rotation, characterised in that during said treatment cycle (B) at least one spinning phase (C) of the laundry is provided, i.e. a rotational phase of the basket at a second speed (1000 rpm) substantially higher than said first speed (55 rpm).

2. Method for drying laundry according to claim 1, characterised in that the starting of said spinning phase (C) of the laundry takes place when the laundry mass, or the hot air present inside the tub, has reached a determined temperature (60°C) or an established level of humidity, the detection of said determined temperature or humidity (60°C) being carried out by way of a sensor element (S).

3. Method for drying laundry according to claim 1, characterised in that the starting of said spinning phase of the laundry takes place after a determined period of time (30 minutes), counted from the beginning of the treatment cycle.

4. Method for drying laundry according to at least one of the previous claims, characterised in that said spinning phase of the laundry (C) has a substantially determined duration (2 minutes), controlled by way of time counting means (CLOCK).

5. Method for drying laundry according to at least one of the previous claims, characterised in that the enabling of the execution of said spinning phase (C) of the laundry during said treatment cycle (B) is automatic.

6. Method for drying laundry according to at least one of the previous claims, characterised in that the value of said determined temperature or humidity (60°C) is chosen in function of the characteristics of the laundry to be dried, in particular based on the type of fabric and/or quantity of fabric.

7. Method for drying laundry according to at least one of the previous claims, characterised in that said second rotational speed (1000 rpm) of the basket during said spinning phase (C) is chosen in function of the characteristics of the laundry to be dried, in particular based on the type of fabric and/or quantity of fabric.

8. Method for drying laundry according to at least one of the previous claims, characterised in that the duration of said spinning phase (C) is chosen in function of the characteristics of the laundry to be dried, in particular based on the type of fabric and/or quantity of fabric.

9. Method for drying laundry according to at least one of the previous claims, characterised in that the starting time of said spinning phase (C) is chosen in function of the characteristics of the laundry to be dried, in particular based on the type of fabric and/or quantity of fabric.

10. Method for drying laundry according to at least one of the claims from 6 to 9, characterised in that the information relative to the characteristics of the laundry to be dried, in particular the type of fabric and/or the quantity of fabric, is manually inputted by the user, by way of manual selection means (T,Q).

11. Method for drying laundry according to at least one of the claims from 6 to 9, characterised in that the information relative to the characteristics of the laundry to be dried, in particular the type of fabric and/or the quantity of fabric, are detected in an automatic manner by the machine carrying out the drying, by way of automatic detection means (P).

12. Machine for realising the drying of laundry, comprising all the elements known for its functioning, from among which a motor (M) that places the basket in rotation containing the laundry to be dried, a control device (MP), said machine providing for at least one treatment cycle (B) during which the basket containing the laundry to be dried is made to rotate at a first substantially determined speed (55 rpm) and for a determined period of time (120 minutes), in the presence of hot air inside a tub within which said basket is made to rotate, characterised in that control means (S,MP,CLOCK,ROM,Q,T,P) are provided which, during the treatment cycle, are able to realise at least one spinning phase (C) of the laundry, i.e. to control a rotational phase of the basket at a second speed (1000 rpm) substantially higher than the first speed (55rpm).

13. Machine, according to the previous claim, characterised in that to the control device, that in particular comprises an electronic micro-controller (MP), permanent memory means (ROM) and a sensor (S) are associated able to detect or derive the value of the temperature and/or humidity of the laundry mass contained in the basket, within said permanent memory means (ROM) a coded control program being contained that indicates the temperature and/or humidity to which the spinning (C) has to be initiated, and/or what its duration should be and/or what the rotational speed of the basket during the spinning phase (C) should be and/or what the starting time of said spinning phase should be.

14. Machine, according to the previous claim, characterised in that in said permanent memory means (ROM) information is coded indicating, in function of the characteristics of the laundry load to be dried, in particular the type of fabric and/or quantity of fabric, the optimal temperature and/or humidity according to which the spinning (C) has to start, and/or the duration of the spinning (C) and/or what the starting time of said spinning phase should be.

15. Machine, according to claim 16, characterised in that means are provide (P) for deriving in an automatic manner information representing the characteristics (fabric type and quantity) of the laundry load to be dried.

16. Machine, according to the previous claim, characterised in that said means comprise a level sensor (P) and in that the control device (MP) is equipped with an appropriate knowledge base, coded in said permanent memory means (ROM),for obtaining from the times and from the number of water level restorations in the tub, operated by the level sensor (P), the necessary information concerning the characteristics (fabric type and quantity) of the laundry load to be dried.
